# EUROPÄISCHE PATENTSCHRIFT

(11) **EP 2 544 925 B1**
(45) Veröffentlichungstag und Bekanntmachung des Hinweises auf die Patenterteilung: **08.10.2014**
(21) Anmeldenummer: 11707788.3
(22) Anmeldetag: 15.02.2011
(51) Int. Cl.: B60R 22/02, B60R 22/18, B60N 2/68

(54) **SICHERHEITSGURTSYSTEM IN EINEM FAHRZEUG**
SAFETY BELT SYSTEM IN A VEHICLE
SYSTÈME DE CEINTURE DE SÉCURITÉ DANS UN VÉHICULE

(30) Priorität: 08.03.2010 DE 102010010612
(43) Veröffentlichungstag der Anmeldung: 16.01.2013
(73) Patentinhaber: Volkswagen Aktiengesellschaft, 38440 Wolfsburg (DE)
(72) Erfinder: BAUR, Elmar, 29399 Wahrenholz (DE); WALTER, Helmut, 38162 Cremlingen (DE)
(86) Internationale Anmeldenummer: PCT/EP2011/000693
(87) Internationale Veröffentlichungsnummer: WO 2011/110273

(56) Entgegenhaltungen:
- DE-A1- 3 741 831
- DE-A1-102005 007 428
- US-A- 6 042 190
- US-B1- 6 325 417

## Beschreibung

Die Erfindung betrifft ein Fahrzeug mit einem Sicherheitsgurtsystem gemäß dem Oberbegriff des Patentanspruches 1.

Bei sogenannten Integralsitzen ist der Retraktor des Sicherheitsgurtes meist im Fahrzeugsitz integriert. Der Gurtaustritt erfolgt aus der Rückenlehne. Bei einer Neigungsverstellung der Rückenlehne wird somit der Gurtaustritt mitverstellt, so dass auch in Liegeposition des Fahrzeugsitzes der Verlauf des angelegten Sicherheitsgurtes über den Sitzbenutzer einwandfrei ist. Aus der DE 10 2005 007 428 A1 ist ein derartiger Fahrzeugsitz bekannt.

Alternativ dazu können im Fahrzeug die Sicherheitsgurte im Beckenbereich sowie im Schulterbereich jeweils an der Fahrzeugsäule angebunden sein. So weist ein gattungsgemäßes Fahrzeug zumindest einen frontseitigen Beifahrersitz und einen dahinter angeordneten fondseitigen Fahrzeugsitz mit zugehörigem Sicherheitsgurt auf. Der fondseitige Sicherheitsgurt ist in seiner fondseitigen Anlegeposition von einem Sitzbenutzer des fondseitigen Fahrzeugsitzes in üblicher Weise anlegbar.

Bei einer oben beschriebenen Konstellation kann der Gurtaustrittspunkt des Sicherheitsgurtes im Schulterbereich einer Neigungsverstellung der Rückenlehne des Beifahrersitzes nicht folgen, sondern bleibt dieser unverändert. Dadurch ergibt sich insbesondere in einer Liegeposition des frontseitigen Beifahrersitzes ein nicht mehr einwandfreier Verlauf des Sicherheitsgurtes über den Sitzbenutzer, wodurch es im Crashfall zu Sicherheitsproblemen kommen kann.

Die US 6325417 offenbart ein Sicherheitsgurtsystem gemäß dem Oberbegriff des Anspruchs 1.

Die Aufgabe der Erfindung besteht darin, Fahrzeuge mit einem Sicherheitsgurtsystem bereitzustellen, bei dem ohne Nutzung eines Integralsitzes dem Sitzbenutzer von insbesondere dem Beifahrersitz während eines Fahrbetriebs eine sichere Liegeposition bereitstellbar ist.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 weist das Fahrzeug zumindest ein Gurtführungselement auf, mit dem der fondseitige Sicherheitsgurt von seiner fondseitigen Anlegeposition in eine frontseitige Anlegeposition gebracht werden kann. In der frontseitigen Anlegeposition ist somit der Fondgurt vom Sitzbenutzer des Frontsitzes nutzbar.

In der frontseitigen Anlegeposition des Fondgurtes wird somit dessen Schultergurt nicht nach oben zur Fahrzeugsäule, sondern nach hinten in den Fondbereich abgeführt. Bei einer Neigungsverstellung des frontseitigen Fahrzeugsitzes in eine Liegeposition verbleibt somit der Verlauf des Schultergurtes über den Frontsitznutzer stets einwandfrei.

Gemäß einer ersten Ausführungsform kann das Gurtführungselement ein Umlenkelement sein, in dem der fondseitige Sicherheitsgurt einlegbar ist. Mittels des Umlenkelementes kann der Gurtverlauf des nach vorne geführten fondseitigen Sicherheitsgurtes stets einwandfrei eingestellt werden. Das Umlenkelement ist dabei lagemäßig so auszurichten, dass es sich zumindest in der Liegeposition des frontseitigen Fahrzeugsitzes im Schulterbereich der Rückenlehne des frontseitigen Fahrzeugsitzes befindet. Dadurch wird gewährleistet, dass auch in der Liegeposition der fondseitige Sicherheitsgurt einwandfrei über den Schulterbereich des Sitzbenutzers des frontseitigen Fahrzeugsitzes geführt ist.

Der fondseitige Sicherheitsgurt kann mit einem Gurtende an einem Retraktor und mit dem anderen Gurtende an einem karosserieseitigen Endbeschlag angebunden sein. Sowohl der Retraktor als auch der karosserieseitige Endbeschlag können im Fondbereich des Fahrzeuges angeordnet sein. Dabei kann alternativ und/oder zusätzlich zu dem vorgenannten Umlenkelement auch der karosserieseitige Endbeschlag als ein Gurtführungselement im Sinne der Erfindung wirken. Hierzu ist es bevorzugt, wenn der Endbeschlag des fondseitigen Sicherheitsgurtes vom Fondbereich in den Frontbereich verstellbar ist, wodurch der fondseitige Sicherheitsgurt in seine frontseitige Anlegeposition verbracht werden kann.

Der fondseitige Sicherheitsgurt kann jeweils in der fondseitigen oder in der frontseitigen Anlegeposition seitlich entlang einer Seitenwange des frontseitigen oder des fondseitigen Fahrzeugsitzes verlaufen. Beim Anlegen kann ein Schultergurtabschnitt sowie ein Beckengurtabschnitt des Sicherheitsgurtes bis zur gegenüberliegenden Seite des Fahrzeugsitzes geführt werden. Insofern ist der grundsätzliche Aufbau des fondseitigen Sicherheitsgurtes identisch mit herkömmlichen Sicherheitsgurten, die im Fondbereich, etwa in der zweiten Sitzreihe, eingesetzt werden.

Vor diesem Hintergrund kann der fondseitige Sicherheitsgurt eine Anschnall-Gurtzunge aufweisen, die entlang des Gurtbandes frei verschiebbar ist. Beim Anlegen des Sicherheitsgurtes kann die Anschnall-Gurtzunge in ein korrespondierendes Anschnall-Gurtschloss lösbar festgelegt werden, das seitlich am front- oder am fondseitigen Fahrzeugsitz angeordnet ist.

Diese Anschnall-Gurtzunge ist dabei zwischen den beiden Gurtenden des fondseitigen Sicherheitsgurtes angeordnet.

Der oben erwähnte, als Gurtführungselement verstellbar ausgeführte Endbeschlag kann in unterschiedlicher Weise vom Fondbereich in den Frontbereich des Fahrzeuges verlagert werden. Fertigungstechnisch besonders einfach ist es jedoch, den Endbeschlag benutzerseitig lösbar vorzusehen. Insbesondere kann der Endbeschlag eine Endbeschlag-Gurtzunge aufweisen. Je nach Einsatz des fondseitigen Sicherheitsgurtes kann somit der Endbeschlag an korrespondierenden Endbeschlag-Gurtschlössern des frontseitigen oder des fondseitigen Fahrzeugsitzes festgelegt werden. Die somit erforderlichen Endbeschlag- und Anschnall-Gurtschlösser sind dabei jeweils an gegenüberliegenden Seiten des frontseitigen und des fondseitigen Fahrzeugsitzes angeordnet.

Zusätzlich kann der frontseitige Fahrzeugsitz auch einen frontseitigen Sicherheitsgurt aufweisen, der in bekannter Weise im Schulterbereich sowie im Beckenbereich jeweils an einer Fahrzeugsäule angebunden sein kann. Dieser frontseitige Sicherheitsgurt ist insbesondere bei aufgerichteter Normalposition des Frontsitzes anwendbar, während der fondseitige Sicherheitsgurt sich in seiner fondseitigen Anlegeposition befindet.

Beabsichtig der Sitzbenutzer eine Neigungsverstellung des Frontsitzes in die Liegeposition, so kann hierfür der fondseitige Sicherheitsgurt eingesetzt werden. Hierzu kann zunächst der fondseitige Sicherheitsgurt von seinem Endbeschlag gelöst werden und der Fondgurt in das Gurtumlenkelement eingelegt werden. Anschließend kann die Endbeschlag-Gurtzunge im Frontbereich in das Gurtschloss des frontseitigen Endbeschlages eingerastet werden, wodurch der fondseitige Sicherheitsgurt in seine frontseitige Anlegeposition verbracht ist, in der sich die Anschnall-Gurtzunge freibeweglich zwischen dem Umlenkelement und dem frontseitigen Endbeschlag des Fondgurtes verstellen lässt.

In einer bevorzugen Ausführungsform kann das Gurtumlenkelement unmittelbar an der Rückenlehne oder der Kopfstütze des frontseitigen Fahrzeugsitzes befestigt sein, und zwar insbesondere im Schulterbereich an der oberen Kante der Rückenlehne. Auf diese Weise ist das Gurtumlenkelement stets bewegungsgekoppelt mit der neigungsverstellbaren Rückenlehne des frontseitigen Fahrzeugsitzes.

Alternativ dazu ist es auch denkbar, das Gurtumlenkelement nicht unmittelbar am frontseitigen Fahrzeugsitz zu fixieren, sondern an einem verstellbaren Führungselement zu haltern. Das Führungselement kann beispielhaft ein Tragarm sein, der schwenkbar an der Fahrzeugkarosserie angelenkt sein kann. Durch Schwenkbetätigung des Tragarmes kann somit das Umlenkelement zwischen der front- und der fondseitigen Anlegeposition verstellt werden.

In einer weiteren alternativen Ausführungsform kann das Gurtumlenkelement an einer nach vorne kippbaren Rückenlehne des fondseitigen Fahrzeugsitzes derart angeordnet sein, dass das Umlenkelement durch Kippen der fondseitigen Rückenlehne automatisch nach vorne in die frontseitige Anlegeposition verstellbar ist. Der Verstellweg des Umlenkelementes kann dabei so ausgelegt sein, dass sich zumindest in der Liegeposition des Frontsitzes eine einwandfreie Relativlage des Umlenkelementes ergibt.

Auf diese Weise kann der frontseitige Sicherheitsgurt mit einer vom fondseitigen Sicherheitsgurt ausgeübten Rückstellkraft beaufschlagt werden. Die Rückstellkraft ergibt sich dabei durch den Retraktor des fondseitigen Sicherheitsgurtes. Diese kann so eingestellt sein, dass der angelegte frontseitige Sicherheitsgurt stets nach hinten umgelenkt wird. Bei einer Anordnung des Umlenkelementes im Schulterbereich kann somit insbesondere der Verlauf des Sicherheitsgurtes über die Schulter des Fahrzeuginsassen unabhängig von der Neigung der Rückenlehne des frontseitigen Fahrzeugsitzes einwandfrei gestaltet werden.

Die oben erwähnte Koppelstelle zwischen dem Umlenkelement und dem fondseitigen Sicherheitsgurt kann ein herkömmliches Gurtschloss aufweisen, in das die Gurtzunge des fondseitigen Sicherheitsgurtes einsteckbar ist.

Nachfolgend sind mehrere Ausführungsbeispiele der Erfindung anhand der beigefügten Figuren beschrieben.

Es zeigen:
- Fig. 1: in einer teilweisen perspektivischen Darstellung einen Fahrzeuginnenraum mit einem Beifahrersitz sowie einer dahinter angeordneten fondseitigen Sitzreihe;
- Fig. 2: in einer Ansicht entsprechend der Fig. 1 den fondseitigen Sicherheitsgurt in seiner frontseitigen Anlegeposition;
- Fig. 3: in einer Ansicht entsprechend der Fig. 1 und 2 einen Sitzbenutzer des Beifahrersitzes mit angelegtem fondseitigen Sicherheitsgurt;
- Fig. 4: in einer Seitenansicht einen Sitzbenutzer des Beifahrersitzes bei angelegtem fondseitigem Sicherheitsgurt gemäß dem zweiten Ausführungsbeispiel;
- Fig. 5: in einer Ansicht entsprechend der Fig. 4 ein drittes Ausführungsbeispiel;
- Fig. 6 und 7: jeweils vierte und fünfte Ausführungsbeispiele;
- Fig. 8: in einer Ansicht entsprechend der Fig. 4 ein sechstes Ausführungsbeispiel nicht gemäß der Erfindung, und
- Fig. 9: ein in der Fig. 8 eingesetztes Umlenkelement.

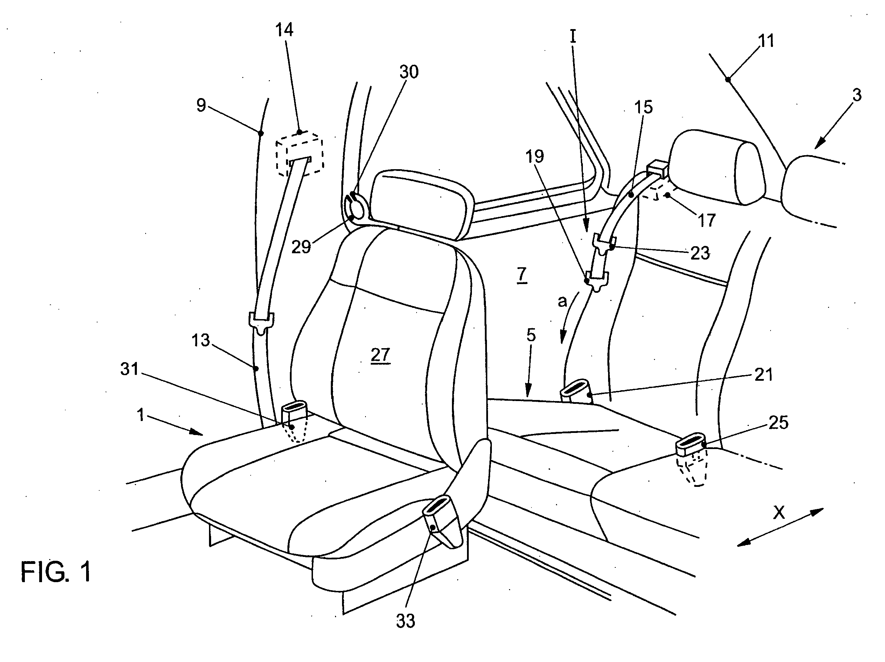

In der Fig. 1 ist in einer Prinzipdarstellung ein Ausschnitt aus einem Fahrzeuginnenraum mit einem frontseitigen Beifahrersitz 1 sowie einer fondseitigen Sitzreihe 3 gezeigt, von der nur der rechte äußere Fondsitz 5 dargestellt ist. Der Fahrzeuginnenraum ist gemäß der Fig. 1 durch eine Fahrzeugseitenwand 7 begrenzt, die nur ausschnittsweise im Bereich zwischen der B-Säule 9 und der C-Säule 11 gezeigt ist. Die Fahrzeugseitenwand 7 geht oberseitig in ein ebenfalls nicht dargestelltes Fahrzeugdach über.

Wie aus der Fig. 1 weiter hervorgeht, ist an der B-Säule 9 ein Frontgurt 13 angebunden. Dieser ist mit seinem oberen Gurtende in einem Retraktor 14 aufgerollt und mit seinem unteren Gurtende an einem nicht weiter dargestellten karosserieseitigen Endbeschlag festgelegt. Dem Fondsitz 5 ist ebenfalls ein Sicherheitsgurt 15 zugeordnet. Dessen oberes Gurtende ist in einem, im Fondsitz 5 integrierten Retraktor 17 aufgerollt. Das untere Gurtbandende des Fondgurts 15 weist eine später beschriebenen Endbeschlag-Gurtzunge 19 aufweist, die in einem als Gurtschloss ausgebildeten Endbeschlag 21 verrastbar ist.

Zum Verrasten des Fondgurtes 15 in seinem unteren Endbeschlag 21 wird dessen Endbeschlag-Gurtzunge 19 gemäß der Fig. 1 in einer Bewegungsrichtung a in das Endbeschlag-Gurtschloss 21 eingeführt. Auf diese Weise ist eine fondseitige, in der Fig. 1 mit l gekennzeichnete Anlegeposition I bereitgestellt, bei der ein Sitzbenutzer des Fondsitzes 5 in bekannter Weise den Fondgurt 15 anlegen kann.

Der fondseitige Sicherheitsgurt 15 ist in der Anlegeposition I entlang einer Seitenwange der Rückenlehne des Fondsitzes 5 nach unten bis zum Endbeschlag-Gurtschloss 21 geführt. Zwischen der unteren Endbeschlag-Gurtzunge 19 und dem oberen Retraktor 17 ist eine weitere, verschiebbar angeordnete Anschnall-Gurtzunge 23 vorgesehen. Diese kann zum Anlegen des Sicherheitsgurtes 15 in bekannter Weise über den Sitzbenutzer im korrespondierenden Anschnall-Gurtschloss 25 lösbar festgelegt werden. Das Anschnall-Gurtschloss 25 ist in Fahrzeugquerrichtung auf der, dem Endbeschlag-Gurtschloss 21 gegenüberliegenden Seite des Fahrzeugsitzes 5 angeordnet.

Wie aus der Fig. 1 weiter hervorgeht, weist der Beifahrersitz 1 an der Oberseite der Rückenlehne 27 ein Gurtumlenkelement 29 auf. Dieses ist an einer, der Fahrzeugseitenwand 7 zugewandten Seite positioniert.

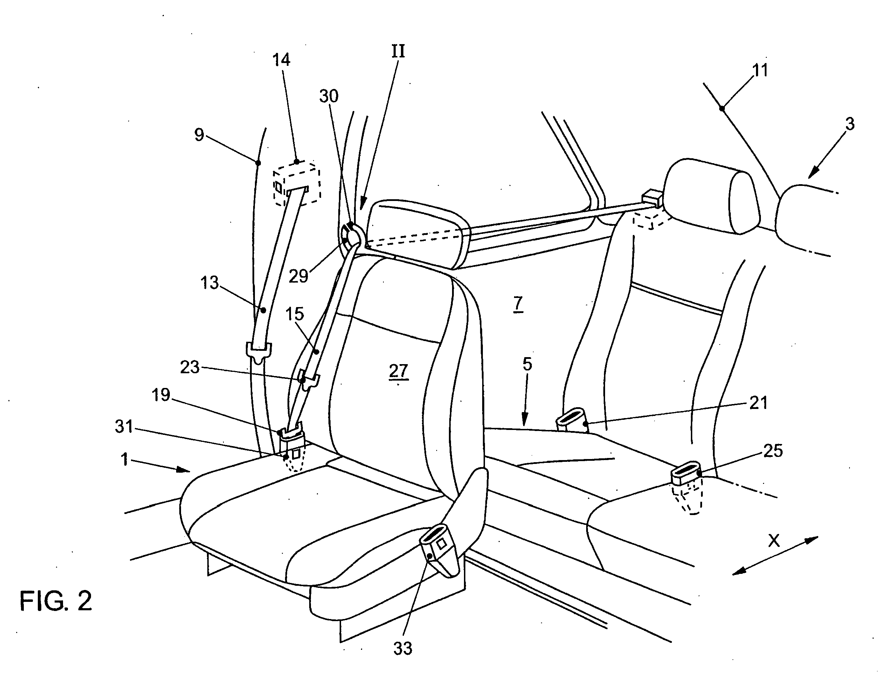

Das Gurtumlenkelement 29 ist mit einem seitlich offenen Führungsschlitz 30 ausgebildet, in dem der fondseitige Sicherheitsgurt 15 einlegbar ist, wie es zur Herstellung einer in der Fig. 2 gezeigten frontseitigen Anlegeposition II des fondseitigen Sicherheitsgurtes 15 erforderlich ist.

Um den fondseitigen Sicherheitsgurt 15 in seine in der Fig. 2.gezeigte frontseitige Anlegeposition II zu verbringen, sind dem Beifahrersitz 1 seitlich angeordnete Gurtschlösser 31, 33 zugeordnet. Das der Fahrzeugwand 7 zugewandte Gurtschloss 31 dient dabei als ein Endbeschlag-Gurtschloss, in dem die Endbeschlag-Gurtzunge 19 des fondseitigen Sicherheitsgurtes 15 einsteckbar ist. In das in Fahrzeugquerrichtung gegenüberliegende seitliche Anschnall-Gurtschloss 33 ist dagegen die entlang dem Gurtband verschiebbare Gurtzunge 23 einsteckbar, um den fondseitigen Sicherheitsgurt 15 anzulegen.

Zur Bereitstellung dieser zweiten Anlegeposition II ist zunächst das Endbeschlag-Gurtschloss 19 des fondseitigen Sicherheitsgurtes 15 vom Endbeschlag-Gurtschloss 21 zu lösen. Anschließend wird der Sicherheitsgurt 15 in das Umlenkelement 29 eingelegt und das Gurtschloss 19 in den frontseitigen Endbeschlag 21 lösbar festgelegt. Der eigentliche frontseitige Sicherheitsgurt 13 bleibt demgegenüber unbenutzt.

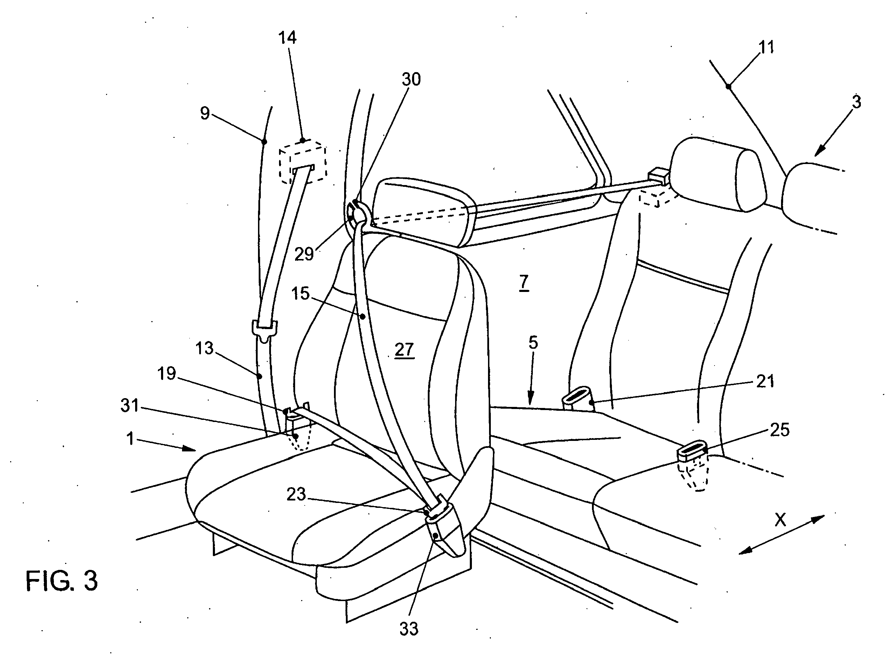

In der weiteren Fig. 3 ist der Verlauf des Fondgurts 15 gezeigt, wenn dieser vom Sitzbenutzer des Beifahrersitzes 1 angelegt ist. Daraus geht hervor, dass der Sicherheitsgurt 15 ausgehend vom Schulterbereich des Beifahrersitzes 1 in etwa horizontal nach hinten in den Fondbereich verläuft. Dieser horizontale Verlauf in den Fondbereich kann selbst bei einer Neigungsverstellung der Rückenlehne 27 in eine Liegeposition in etwa beibehalten werden, wodurch stets ein optimaler Gurtverlauf im Schulterbereich gewährleistet ist. Zusätzlich ist gemäß der Fig. 3 auch der untere Endbeschlag des fondseitigen Sicherheitsgurtes 15 in den Frontbereich verlagert, wodurch auch der untere Anlenkpunkt im Beckenbereich so liegt, dass ein einwandfreier Gurtverlauf im Beckenbereich vorhanden ist.

Sofern keine Liegeposition des Beifahrersitzes 5 beabsichtigt ist, kann der fondseitige Sicherheitsgurt 15 wieder in seine, in der Fig. 1 gezeigte fondseitige Anlegeposition I verbracht werden. In diesem Fall kann im Fahrbetrieb der eigentliche frontseitige Sicherheitsgurt 13 angelegt werden, da keine Neigungsverstellung der Rückenlehne 27 in eine Liegeposition zu erwarten ist.

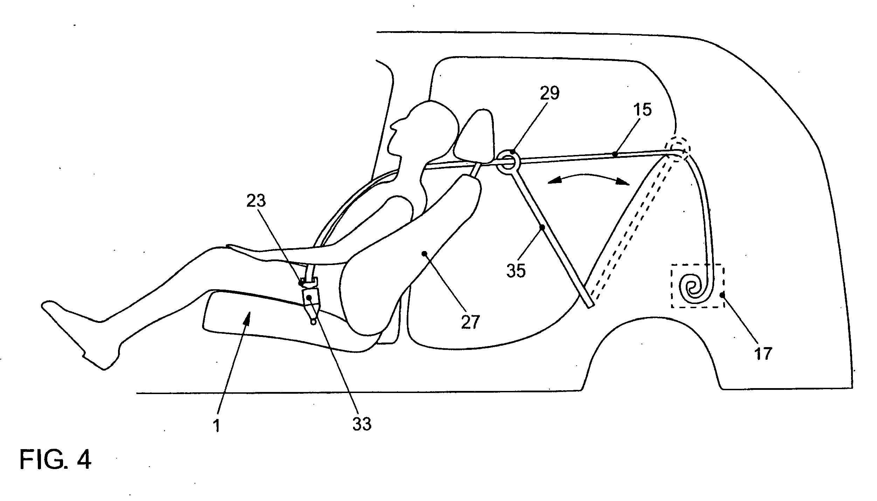

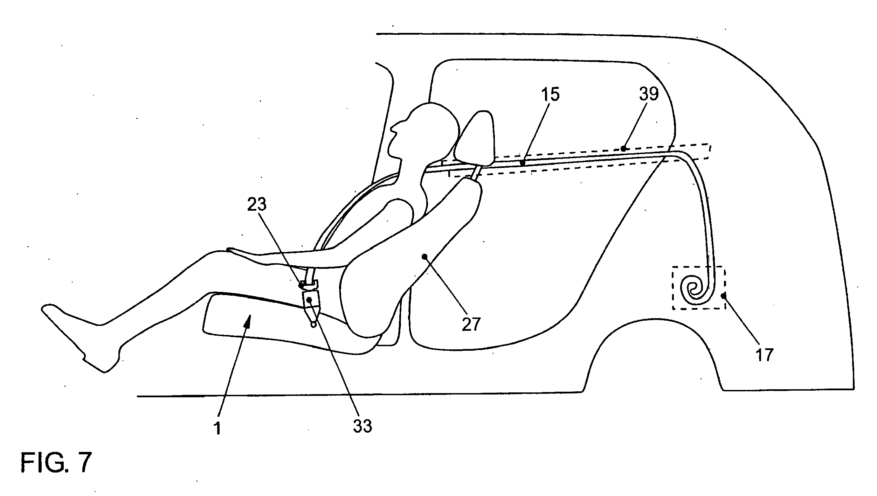

In den nachfolgenden Fig. 4 bis 7 sind weitere Ausführungsbeispiele gezeigt, in denen der fondseitige Sicherheitsgurt 15 von einem Sitzbenutzer des Beifahrersitzes 1 angelegt ist. So ist in der Fig. 4 der Beifahrersitz 5 bereits in einer Liegeposition mit nach hinten geneigter Rückenlehne 27 gezeigt. Der fondseitige Sicherheitsgurt 15 ist dabei durch ein Umlenkelement 29 bis in den Fondbereich geführt und mit seiner Anschnall-Gurtzunge 23 am Anschnall-Gurtschloss 33 des Beifahrersitzes 1 lösbar festgelegt.

Im Unterschied zu den vorangegangenen Figuren ist das Umlenkelement 29 nicht unmittelbar an der Rückenlehne 27 des Beifahrersitzes 1 montiert, sondern in Fahrzeuglängsrichtung verstellbar an einem Tragarm 35 gehaltert. Der Tragarm 35 ist gemäß der Fig. 4 nach vorne geschwenkt, wodurch sich das Umlenkelement 29 im Schulterbereich der Rückenlehne 27 des Beifahrersitzes 1 befindet. Auf diese Weise ist ein in der Liegeposition des Beifahrersitzes 1 ein optimaler Gurtverlauf über den Schulterbereich des Fahrzeuginsassen gewährleistet. In einer hochgestellten Normalposition des Beifahrersitzes 1 kann dagegen entgegen der Fahrtrichtung nach hinten in eine Verwahrposition verschwenkt werden.

Alternativ zur gezeigten Ausführungsform muss der schwenkbare Tragarm nicht im Bodenbereich der Fahrzeugkarosserie angelenkt sein, sondern kann dieser auch im Dachbereich der Fahrzeugkarosserie angelenkt werden.

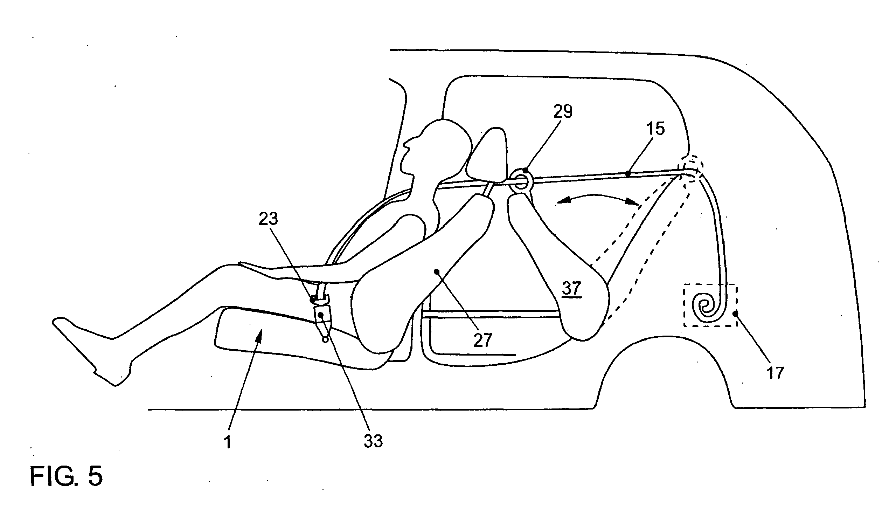

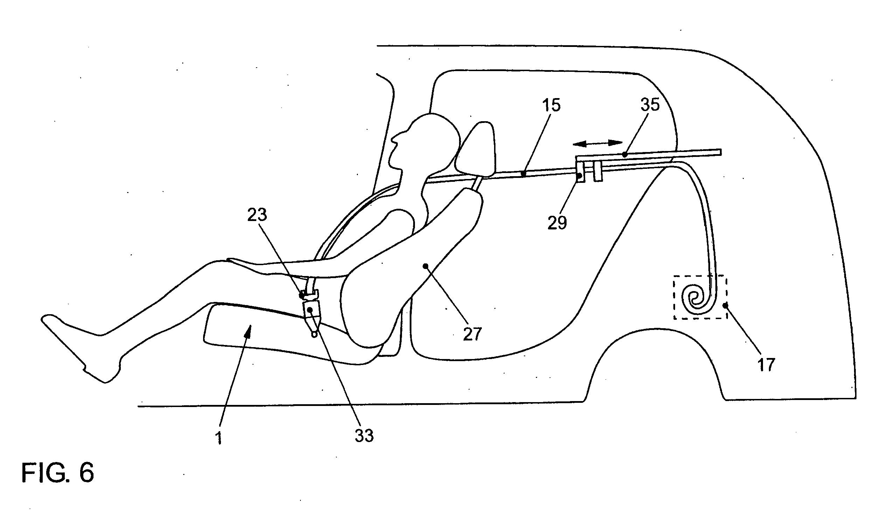

In der Fig. 5 ist das Umlenkelement 29 nicht an einem schwenkbaren Tragarm 35 montiert, sondern unmittelbar an der Rückenlehne 37 des fondseitigen Fahrzeugsitzes 5. Der Beifahrersitz 1 ist ebenfalls in seiner Liegeposition gezeigt. Um nunmehr das Umlenkelement 29 in den Schulterbereich der Rückenlehne des frontseitigen Beifahrersitzes 1 zu verbringen, kann die Rückenlehne 37 des Fondsitzes 5 nach vorne gekippt werden. Alternativ dazu ist in der Fig. 6 das Umlenkelement 29 an einem linear verstellbaren Tragarm 35 angeordnet, der bei Nutzung des fondseitigen Sicherheitsgurtes 15 durch den Sitzbenutzer des Beifahrersitzes 1 automatisch nach vorne gefahren werden kann. Anstelle des linear verstellbaren Tragarmes 35 der Fig. 6 kann eine sich in Fahrzeuglängsrichtung erstreckende Führungsschiene 39 in der Türbrüstung der hinteren Fahrzeugtür vorgesehen, entlang der sich das Umlenkelement 29 in der Fahrzeuglängsrichtung verschieben kann.

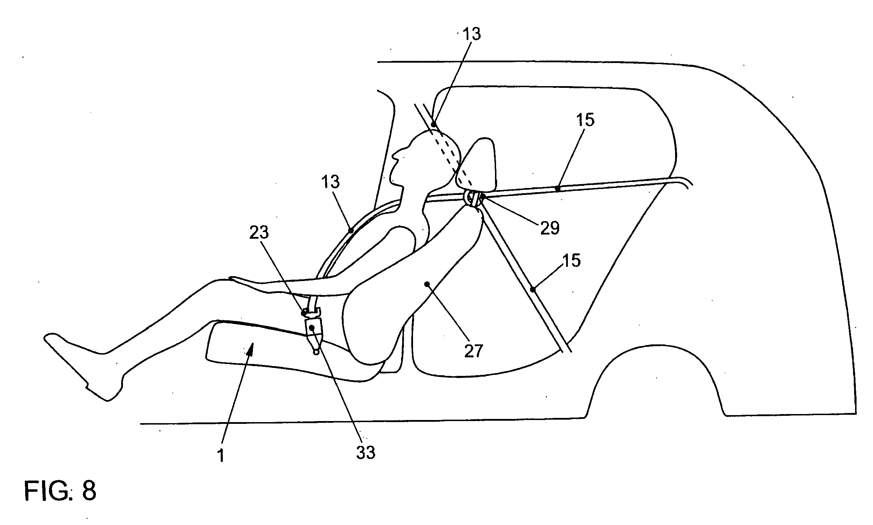

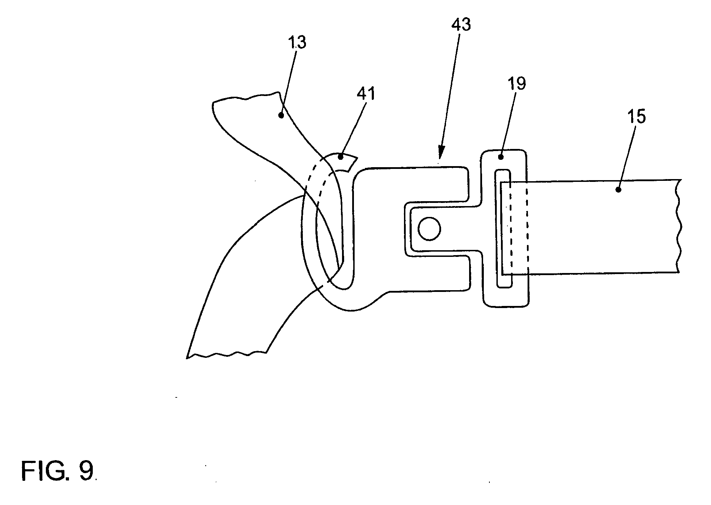

In der Fig. 8 ist ein weiteres Ausführungsbeispiel, nicht gemäß der Erfindung, gezeigt, bei dem im Umlenkelement 29 sowohl der frontseitige Sicherheitsgurt 13 als auch der fondseitige Sicherheitsgurt 15 zusammengeführt sind. Hierzu weist das Umlenkelement 29 gemäß der Fig. 9 einen Führungsschlitz 41 auf, in den der frontseitige Sicherheitsgurt 13 eingelegt ist. Zusätzlich weist das in der Fig. 9 vergrößert dargestellte Umlenkelement 29 ein Gurtschloss 43 auf, in das die Anschnall-Gurtzunge 23 des fondseitigen Sicherheitsgurtes 15 eingesteckt werden kann.

Die Aufrollkraft des in der Fig. 8 nicht gezeigten Retraktors des fondseitigen Sicherheitsgurtes 15 ist dabei so eingestellt, dass der frontseitige Sicherheitsgurt 13 im Schulterbereich der Rückenlehne 27 nach hinten umgelenkt wird. Dadurch kann im Schulterbereich stets ein Gurtverlauf erfolgen, der in den Fondbereich nach hinten geführt ist, und nicht nach oben in Richtung auf die B-Säule 9 des Fahrzeuges.

### Bezugszeichenliste

- 1: frontseitiger Fahrzeugsitz
- 3: hintere Sitzreihe
- 5: fondseitiger Fahrzeugsitz
- 7: Fahrzeugseitenwand
- 9: B-Säule
- 11: C-Säule
- 13: frontseitiger Sicherheitsgurt
- 14: Retraktor
- 15: fondseitiger Sicherheitsgurt
- 17: Retraktor
- 19: Endbeschlag-Gurtzunge
- 21: Endbeschlag-Gurtschloss
- 23: Anschnall-Gurtzunge
- 25: Anschnall-Gurtschloss
- 27: Rückenlehne
- 29: Umlenkelement
- 30: Führungsschlitz
- 31: frontseitiges Endbeschlag-Gurtschloss
- 33: Anschnall-Gurtschloss
- 35: Führungselement
- 37: Rückenlehne
- 39: Führungsschiene
- 41: Führungsschlitz
- 43: Gurtschloss
- I, II: Anlegepositionen
- a: Bewegungsrichtung

## Patentansprüche

1. Fahrzeug mit zumindest einem frontseitigen Fahrzeugsitz (1) und einem dahinter angeordneten fondseitigen Fahrzeugsitz (5) mit zugehörigem Sicherheitsgurt (15), der in einer fondseitigen Anlegeposition (I) von einem Sitzbenutzer des fondseitigen Fahrzeugsitzes (5) anlegbar ist, wobei das Fahrzeug zumindest ein Gurtführungselement (21; 29) aufweist, mit dem der fondseitige Sicherheitsgurt (15) in eine frontseitige Anlegeposition (II) bringbar ist, in der, der fondseitige Sicherheitsgurt (15) von einem Sitzbenutzer des frontseitigen Fahrzeugsitzes (1) anlegbar ist, **dadurch gekennzeichnet, dass** derfondseitige Sicherheitsgurt (15) eine Anschnall-Gurtzunge (23) aufweist, die zum Anschnallen in jeweils einem korrespondierenden Anschnall-Gurtschloss (25; 33) des front- und fondseitigen Fahrzeugsitzes (1, 5) lösbar festlegbar ist, wobei das jeweilige Anschnall-Gurtschloss (25;33) seitlich am front- und fondseitigen Fahrzeugsitz angeordnet ist.

2. Fahrzeug nach Anspruch 1, **dadurch gekennzeichnet, dass** das Gurtführungselement (29) ein Umlenkelement ist, in das der fondseitige Sicherheitsgurt (15) einiegbar ist.

3. Fahrzeug nach Anspruch 2, **dadurch gekennzeichnet, dass** das Umlenkelement (29) zumindest in einer Liegeposition des frontseitigen Fahrzeugsitzes (1) im Schulterbereich der Rückenlehne (27) des frontseitigen Fahrzeugsitzes (1) angeordnet ist.

4. Fahrzeug nach Anspruch 1, 2 oder 3, **dadurch gekennzeichnet, dass** der fondseitigen Sicherheitsgurt (15) im Fondbereich mit einem Gurtende an einem Retraktor (17) und mit dem anderen Gurtende an einem karosserieseitigen Endbeschlag (21) angebunden ist.

5. Fahrzeug nach Anspruch 4, **dadurch gekennzeichnet, dass** der karosserieseitige Endbeschlag (21) des fondseitigen Sicherheitsgurts (15) als ein Gurtführungselement vom Fondbereich in den Frontbereich verstellbar ist, um den fondseitigen Sicherheitsgurt (15) in seine frontseitige Anlegeposition (II) zu bringen.

6. Fahrzeug nach einem der vorhergehenden Ansprüche, **dadurch gekennzeichnet, dass** der fondseitige Sicherheitsgurt (15) in seiner fondseitigen oder frontseitigen Anlegeposition (I, II) seitlich entlang einer Seite des fondseitigen oder frontseitigen Fahrzeugsitzes (1, 5) verläuft, und beim Anlegen ein Schultergurtabschnitt sowie ein Beckengurtabschnitt des Sicherheitsgurts (15) zur gegenüberliegenden Seite des Fahrzeugsitzes (1, 5) führbar ist.

7. Fahrzeug nach einem der vorhergehenden Ansprüche, **dadurch gekennzeichnet, dass** die erste Anschnall-Gurtzunge (23) zwischen den Gurtenden des fondseitigen Sicherheitsgurts (15) angeordnet ist.

8. Fahrzeug nach einem der vorhergehenden Ansprüche 5 bis 7, **dadurch gekennzeichnet, dass** der Endbeschlag (21) des fondseitigen Sicherheitsgurts (15) benutzerseitig lösbar ist, und insbesondere eine Endbeschlag-Gurtzunge (19) aufweist, die an einem korrespondierenden Endbeschlag-Gurtschloss (21, 31) am frontseitigen oder fondseitigen Fahrzeugsitz (1, 5) festlegbar ist.

9. Fahrzeug nach Anspruch 8, **dadurch gekennzeichnet, dass** jeder der Fahrzeugsitze (1, 5) jeweils Anschnall- und Endbeschlag-Gurtschlösser (21, 31, 25, 33) an gegenüberliegenden Seiten aufweist.

10. Fahrzeug nach einem der vorhergehenden Ansprüche, **dadurch gekennzeichnet, dass** dem frontseitigen Fahrzeugsitz (1) ein frontseitiger Sicherheitsgurt (13) zugeordnet ist, der an einer Fahrzeugsäule (9) angebunden ist.

11. Fahrzeug nach Anspruch 10, **dadurch gekennzeichnet, dass** bei aufgerichteter Rückenlehne (27) des frontseitigen Fahrzeugsitzes (1) der frontseitige Sicherheitsgurt (13) anwendbar ist, und in der Liegeposition des frontseitigen Fahrzeugsitzes (1) der fondseitige Sicherheitsgurt (15) für den Sitzbenutzer des frontseitigen Fahrzeugsitzes (1) bereitstellbar ist.

12. Fahrzeug nach einem der Ansprüche 2 bis 11, **dadurch gekennzeichnet, dass** das Gurtumlenkelement (29) an der Rückenlehne (27) oder der Kopfstütze des frontseitigen Fahrzeugsitzes (1) befestigt ist.

13. Fahrzeug nach einem der Ansprüche 2 bis 11, **dadurch gekennzeichnet, dass** das Gurtumlenkelement (29) an einem verstellbaren Führungselement (35), etwa einem Tragarm, gehaltert ist, mit dem das Umlenkelement (29) zwischen der front- und fondseitigen Anlegeposition (I, II) verstellbar ist

14. Fahrzeug nach einem der Ansprüche 2 bis 11, **dadurch gekennzeichnet, dass** das Gurtumlenkelement (29) an einer nach vorne kippbaren Rückenlehne (37) des fondseitigen Fahrzeugsitzes (5) derart angeordnet ist, dass das Gurtumlenkelement (29) durch Kippen der fondseitigen Rückenlehne (37) nach vorne in die frontseitige Anlegeposition (II) verstellbar ist.

## Claims

1. Vehicle with at least one front vehicle seat (1) and one rear vehicle seat (5) which is arranged therebehind and has an associated safety belt (15) which, in a rear put-on position (I), can be put on by a seat user of the rear vehicle seat (5), wherein the vehicle seat has at least one belt-guiding element (21; 29) with which the rear safety belt (15) can be brought into a front put-on position (II), in which the rear safety belt (15) can be put on by a seat user of the front vehicle seat (1), **characterized in that** the rear safety belt (15) has a buckle-up belt tongue (23) which, for buckling-up purposes, can be fixed releaseably in a respectively corresponding buckle-up belt buckle (25; 33) of the front and rear vehicle seat (1, 5), wherein the respective buckle-up belt buckle (25; 33) is arranged to the side of the front and rear vehicle seat.

2. Vehicle according to Claim 1, **characterized in that** the belt-guiding element (29) is a deflecting element into which the rear safety belt (15) can be placed.

3. Vehicle according to Claim 2, **characterized in that**, at least in a reclining position of the front vehicle seat (1), the deflecting element (29) is arranged in the shoulder region of the backrest (27) of the front vehicle seat (1).

4. Vehicle according to Claim 1, 2 or 3, **characterized in that** the rear safety belt (15) is connected in the rear region by one belt end to a retractor (17) and by the other belt end to a body-side end fitting (21).

5. Vehicle according to Claim 4, **characterized in that** the body-side end fitting (21) of the rear safety belt (15) as a belt-guiding element can be adjusted from the rear region into the front region in order to bring the rear safety belt (15) into the front put-on position (II) thereof.

6. Vehicle according to one of the preceding claims, **characterized in that**, in the rear or front put-on position (I, II) thereof, the rear safety belt (15) runs laterally along one side of the rear or front vehicle seat (1, 5), and, when put on, a shoulder belt portion and a lap belt portion of the safety belt (15) can be guided to the opposite side of the vehicle seat (1, 5).

7. Vehicle according to one of the preceding claims, **characterized in that** the first buckle-up belt tongue (23) is arranged between the belt ends of the rear safety belt (15).

8. Vehicle according to one of the preceding Claims 5 to 7, **characterized in that** the end fitting (21) of the rear safety belt (15) can be released by the user and, in particular, has an end-fitting belt tongue (19) which can be fixed on a corresponding end-fitting belt buckle (21, 31) on the front or rear vehicle seat (1, 5).

9. Vehicle according to Claim 8, **characterized in that** each of the vehicle seats (1, 5) has buckle-up and end-fitting belt buckles (21, 31, 25, 33) on opposite sides.

10. Vehicle according to one of the preceding claims, **characterized in that** the front vehicle seat (1) is assigned a front safety belt (13) which is connected to a vehicle pillar (9).

11. Vehicle according to Claim 10, **characterized in that** the front safety belt (13) can be used when the backrest (27) of the front vehicle seat (1) is upright, and the rear safety belt (15) can be provided for the seat user of the front vehicle seat (1) in the reclining position of the front vehicle seat (1).

12. Vehicle according to one of Claims 2 to 11, **characterized in that** the belt-deflecting element (29) is fastened to the backrest (27) or to the headrest of the front vehicle seat (1).

13. Vehicle according to one of Claims 2 to 11, **characterized in that** the belt-deflecting element (29) is mounted on an adjustable guide element (35), for example a supporting arm, with which the deflecting element (29) can be adjusted between the front and rear put-on position (I, II).

14. Vehicle according to one of Claims 2 to 11, **characterized in that** the belt-deflecting element (29) is arranged on a forwardly tiltable backrest (37) of the rear vehicle seat (5) in such a manner that the belt-deflecting element (29) can be adjusted forwards into the front put-on position (II) by tilting of the rear backrest (37).

## Revendications

1. Véhicule doté d'au moins un siège de véhicule (1) situé du côté avant et d'un siège de véhicule (5) situé du côté arrière disposé derrière avec la ceinture de sécurité (15) associée pouvant être insérée dans une position insérée (I) située du côté arrière par un utilisateur de siège du siège de véhicule (5) situé du côté arrière, le véhicule comportant au moins un élément de guidage de ceinture (21 ; 29) à l'aide duquel la ceinture de sécurité (15) située du côté arrière peut être amenée dans une position insérée (II) située du côté avant dans laquelle la ceinture de sécurité (15) située du côté arrière peut être insérée par un utilisateur de siège du siège de véhicule (1) situé du côté avant, **caractérisé en ce que** la ceinture de sécurité (15) située du côté arrière comporte une languette d'encliquetage de ceinture (23) pouvant être fixée de façon amovible pour être respectivement encliquetée dans un élément de serrure de ceinture à encliquetage (25 ; 33) correspondant du siège de véhicule (1, 5) situé du côté avant et arrière, l'élément de serrure de ceinture à encliquetage (25 ; 33) respectif étant disposé en côté au niveau du siège de véhicule situé du côté avant et arrière.

2. Véhicule selon la revendication 1, **caractérisé en ce que** l'élément de guidage de ceinture (29) est un élément de déviation dans lequel la ceinture de sécurité (15) située du côté arrière peut être insérée.

3. Véhicule selon la revendication 2, **caractérisé en ce que** l'élément de déviation (29) est disposé au moins dans une position allongée du siège de véhicule (1) situé du côté avant, dans la zone d'épaule du dossier (27) du siège de véhicule (1) situé du côté avant.

4. Véhicule selon la revendication 1, 2 ou 3, **caractérisé en ce que** la ceinture de sécurité (15) située du côté arrière est rattachée avec une extrémité de ceinture à un rétracteur (17) dans la zone arrière et avec l'autre extrémité de ceinture à une butée terminale (21) située du côté de carrosserie.

5. Véhicule selon la revendication 4, **caractérisé en ce que** la butée terminale (21) située du côté de carrosserie de la ceinture de sécurité (15) située du côté arrière prend la forme d'un élément de guidage de ceinture pouvant être déplacé de la zone arrière dans la zone avant, pour amener la ceinture de sécurité (15) située du côté arrière dans sa position insérée (II) située du côté avant.

6. Véhicule selon l'une quelconque des revendications précédentes, **caractérisé en ce que** la ceinture de sécurité (15) située du côté arrière s'étend, dans sa position insérée (I, II) située du côté arrière ou du côté avant, en côté le long d'un côté du siège de véhicule (1, 5) situé du côté arrière ou situé du côté avant et une section d'épaule de ceinture ainsi qu'une section de bassin de ceinture de la ceinture de sécurité (15) pouvant être guidées en direction du côté opposé du siège de véhicule (1, 5) lors de l'insertion.

7. Véhicule selon l'une quelconque des revendications précédentes, **caractérisé en ce que** la première languette d'encliquetage de ceinture (23) est disposée entre les extrémités de ceinture de la ceinture de sécurité (15) située du côté arrière.

8. Véhicule selon l'une quelconque des revendications 5 à 7, **caractérisé en ce que** la butée terminale (21) de la ceinture de sécurité (15) située du côté arrière est amovible du côté d'utilisateur et comporte notamment une languette de butée terminale de ceinture (19) pouvant être fixée à un élément de serrure de ceinture à butée terminale (21, 31) au niveau d'un siège de véhicule (1, 5) situé du côté avant ou du côté arrière correspondant.

9. Véhicule selon la revendication 8, **caractérisé en ce que** chacun des sièges de véhicule (1, 5) comporte respectivement des éléments de serrure de ceinture à encliquetage et à butée terminale (21, 31, 25, 33) au niveau des côtés opposés.

10. Véhicule selon l'une quelconque des revendications précédentes, **caractérisé en ce qu'**une ceinture de sécurité (13) située du côté avant et rattachée à un montant de véhicule (9) est associée au siège de véhicule (1) situé du côté avant.

11. Véhicule selon la revendication 10, **caractérisé en ce qu'**en présence d'un dossier (27) relevé du siège de véhicule (1) situé du côté avant, la ceinture de sécurité (13) située du côté avant peut être utilisée et que dans la position allongée du siège de véhicule (1) situé du côté avant, la ceinture de sécurité (15) située du côté arrière peut être mise à disposition de l'utilisateur de siège du siège de véhicule (1) situé du côté avant.

12. Véhicule selon l'une quelconque des revendications 2 à 11, **caractérisé en ce que** l'élément de déviation de ceinture (29) est fixé au dossier (27) ou à l'appuie-tête du siège de véhicule (1) situé du côté avant.

13. Véhicule selon l'une quelconque des revendications 2 à 11, **caractérisé en ce que** l'élément de déviation de ceinture (29) est maintenu contre un élément de guidage (35) mobile prenant approximativement la forme d'un bras porteur et avec lequel l'élément de déviation (29) peut être déplacé entre la position insérée (I, II) située du côté avant et du côté arrière.

14. Véhicule selon l'une quelconque des revendications 2 à 11, **caractérisé en ce que** l'élément de déviation de ceinture (29) est disposé au niveau d'un dossier (37) basculable vers l'avant du siège de véhicule (5) situé du côté arrière de telle sorte que l'élément de déviation de ceinture (29) peut être déplacé vers l'avant par basculement du dossier (37) situé du côté arrière dans la position insérée (II) située du côté avant.
